(19) **Europäisches Patentamt / European Patent Office / Office européen des brevets**

(11) **EP 3 701 492 B1**

(12) **FASCICULE DE BREVET EUROPEEN**

(45) Date de publication et mention de la délivrance du brevet:
**02.03.2022 Bulletin 2022/09**

(21) Numéro de dépôt: **18788793.0**

(22) Date de dépôt: **24.10.2018**

(51) Classification Internationale des Brevets (IPC):
**G06T 5/00** *(2006.01)*    **G06T 7/149** *(2017.01)*
**G06T 7/12** *(2017.01)*    **G06T 7/194** *(2017.01)*
**G06T 7/215** *(2017.01)*

(52) Classification Coopérative des Brevets (CPC):
**G06T 5/003; G06T 7/12; G06T 7/149; G06T 7/194; G06T 7/215;** G06T 2207/20116; G06T 2207/20201

(86) Numéro de dépôt international:
**PCT/EP2018/079174**

(87) Numéro de publication internationale:
**WO 2019/081587 (02.05.2019 Gazette 2019/18)**

(54) **PROCEDE DE RESTAURATION D'IMAGES**

VERFAHREN ZUR WIEDERHERSTELLUNG VON BILDERN

IMAGE RESTORATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2017 FR 1760144**

(43) Date de publication de la demande:
**02.09.2020 Bulletin 2020/36**

(73) Titulaire: **Safran Electronics & Defense**
**75015 Paris (FR)**

(72) Inventeurs:
• **RIAZ, Anum**
  **92100 Boulogne Billancourt (FR)**
• **WOISELLE, Arnaud**
  **92100 Boulogne Billancourt (FR)**
• **BUDIN, Joël**
  **92100 Boulogne Billancourt (FR)**

(74) Mandataire: **Cabinet Le Guen Maillet**
**3, impasse de la Vigie**
**CS 71840**
**35418 Saint-Malo Cedex (FR)**

(56) Documents cités:
**US-B2- 8 588 551**

• **MATSUSHITA Y ET AL: "Full-Frame Video Stabilization", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 1, 20 juin 2005 (2005-06-20), pages 50-57, XP010817414, DOI: 10.1109/CVPR.2005.166 ISBN: 978-0-7695-2372-9**
• **Ruxin Wang ET AL: "Recent Progress in Image Deblurring", , 24 septembre 2014 (2014-09-24), XP055485738, Extrait de l'Internet: URL:https://arxiv.org/pdf/1409.6838 [extrait le 2018-06-19]**
• **A. Hoover: "Lecture notes: Active contours", , 22 août 2017 (2017-08-22), XP055486620, Extrait de l'Internet: URL:http://cecas.clemson.edu/~ahoover/ece4 31/lecture-notes/ [extrait le 2018-06-21]**

**Description**

L'invention concerne un procédé de restauration d'images d'une séquence d'images, et un dispositif mettant en œuvre ledit procédé.

Certaines applications utilisant des images ou des séquences d'images nécessitent une très haute qualité d'images. C'est le cas par exemple d'applications de surveillance où une faible qualité d'images peut entraîner de mauvaises interprétations d'une image et, par exemple, des déclenchements de fausses alarmes. La restauration d'images consiste à améliorer une qualité d'une image en lui appliquant diverses techniques de traitement d'images telles que des techniques de réduction ou de suppression de bruit, d'amélioration de contours, d'amélioration de contraste ...

Une image d'une séquence d'images (*i.e.* d'une séquence vidéo), est un cas particulier d'image puisque cette image est généralement proche visuellement d'images temporellement voisines dans la séquence d'images. Un dispositif d'acquisition de séquences d'images, tel qu'une caméra vidéo, possède en effet généralement une fréquence d'acquisition d'images suffisamment élevée pour que des corrélations temporelles subsistent entre des images successives d'une séquence d'images. Utilisées à bon escient, ces corrélations temporelles peuvent permettre à une image de bénéficier d'améliorations apportées à une ou plusieurs images voisines grâce à des méthodes de restauration d'images. Toutefois, identifier des corrélations temporelles existant entre des images n'est pas toujours une tâche facile. C'est notamment le cas lorsqu'une séquence d'images représente au moins un objet en mouvement sur un fond lui-même en mouvement, le fond pouvant alors être considéré comme un objet. En effet, afin de pouvoir bénéficier efficacement des corrélations temporelles existant entre deux images, il est souhaitable de prendre en compte les mouvements de l'objet et les mouvements du fond. Des méthodes connues de restauration d'images comportant des objets en mouvement comprennent une phase d'analyse de mouvement. Cette phase d'analyse de mouvement permet de mettre en correspondance des pixels corrélés entre deux images. Une amélioration apportée à un premier pixel d'une première image peut alors bénéficier à un second pixel d'une seconde image corrélé avec le premier pixel. La phase d'analyse de mouvement utilise généralement des techniques de flot optique comprenant une estimation d'un champ dense de mouvement dans lequel chaque pixel (ou au moins un sous-ensemble de pixels) d'une image à restaurer est associé, par un vecteur de mouvement, à un pixel d'une image de référence par rapport à laquelle le mouvement est déterminé. Ces techniques de restauration d'images sont considérées comme insuffisamment fiables pour permettre une restauration d'images de qualité. De plus, une estimation d'un champ dense de mouvement a un coût calculatoire important. Un tel coût calculatoire n'est pas compatible avec certains systèmes embarqués ou portables susceptibles de mettre en œuvre des méthodes de restauration d'images, telles que des caméras vidéo, des jumelles numériques, des lunettes à réalité augmentée, ... On préfère donc en général remplacer, lors de la phase d'analyse de mouvement, les techniques d'estimation d'un champ dense de mouvement par des techniques d'analyse de mouvement ayant un coût calculatoire moins élevé, telle que les techniques d'estimation de mouvement global. Les techniques d'estimation de mouvement global sont particulièrement efficaces lorsqu'une hypothèse de stationnarité des scènes représentées par la séquence d'images est vérifiée.

Par ailleurs, suite à l'analyse de mouvement, une même méthode de restauration d'images est généralement appliquée à chaque pixel de l'image à restaurer. Or, tous les pixels d'une image n'ont pas un intérêt égal. Il est courant en effet qu'une image représente un objet et un fond. Obtenir un rendu visuel détaillé de l'objet est utile, par exemple, lorsque l'objet doit être identifié précisément, alors que, dans le meilleur des cas, le fond n'est utile que pour situer l'objet dans un contexte. Il est connu des méthodes de restauration d'images dans lesquelles la phase d'analyse de mouvement est suivie d'une segmentation de l'image. La segmentation de l'image permet de diviser l'image en sous-parties homogènes suivant un critère prédéfini. Connaissant les sous-parties constituant l'image, il est possible d'appliquer un traitement d'images plus ou moins efficace (et donc plus ou moins complexe) en fonction de l'intérêt de chaque sous-partie. Lorsque la segmentation suit une estimation d'un champ dense de mouvement, cette segmentation peut s'appuyer sur le champ dense obtenu pour diviser l'image en sous-parties homogènes au sens du mouvement. Cette méthode de segmentation peut toutefois donner des résultats approximatifs, notamment lorsque le champ dense de mouvement est bruité.

D'autres procédés de segmentation existent comme par exemple les procédés de segmentation basés contours actifs. Toutefois, ces procédés sont généralement destinés à des images fixes et, lorsqu'ils sont appliqués à des images d'une séquence d'images, ils utilisent peu (ou pas) les corrélations temporelles existant entre les images.

Matsushita et al. (2005), "Full-Frame Video Stabilization", IEEE Computer Society Conférence on Computer Vision and Pattern Récognition, CVPR'05, San Diego, US, vol. 1, pp. 50-57, récite un deblurring pour la stabilisation vidéo. Zinbi et al. (2006), "Extraction d'objets vidéo: une approche combinant les contours actifs et le flot optique", Actes des Sixièmes Journées Extraction et Gestion des Connaissance, EGC'06, pp. 41-46, divulgue une segmentation avec contours actifs en utilisant une formulation énergétique des contours actifs. Finalement, US7440634B2 décrit le deblurring des images qui sont floues en raison du mouvement d'objets dans la scène.

Il est souhaitable de pallier ces inconvénients de l'état de la technique.

Il est notamment souhaitable de proposer un procédé et un dispositif de restauration d'images adapté aux images comprenant des objets en mouvement. Il est souhaitable de plus que ce procédé et ce dispositif soient adaptés aux images où le fond de l'image est lui-même en mouvement. Il est enfin souhaitable que ledit procédé ait un coût calculatoire faible et puisse être mis en œuvre par un système ayant de faibles capacités calculatoires tel qu'un système embarqué ou portable.

Selon un premier aspect de l'invention, l'invention concerne un procédé de restauration d'images d'une séquence d'images selon la revendication 1.

Utiliser une énergie externe intégrant une énergie dépendante d'un mouvement global de l'objet permet de prendre en compte le mouvement de l'objet dans la segmentation du contour de l'objet. On tire ainsi profit des corrélations existant entre deux images pour améliorer la segmentation.

Dans un mode de réalisation, pour calculer la valeur représentative de l'énergie interne au contour courant, une dérivée première locale et une dérivée seconde locale du contour sont calculées pour des pixels d'un troisième ensemble de pixels de l'image courante appartenant au contour courant de l'objet, ladite valeur représentative de l'énergie interne étant fonction desdites dérivées calculées.

Dans un mode de réalisation, les premier, deuxième et troisième ensembles de pixels sont identiques, et chaque ensemble comprend au moins une sous-partie des pixels de l'image courante appartenant au contour courant de l'objet.

Dans un mode de réalisation, lors d'une première itération dudit procédé, un contour initial de l'objet dans l'image courante est obtenu à partir d'un contour final obtenu lors d'une application du procédé de segmentation à l'image de référence ou d'un contour spécifié par un opérateur dans l'image de référence.

Dans un mode de réalisation, lors de chaque estimation d'une information représentative d'un mouvement global, une information représentative de la forme et de la position de l'objet est obtenue, ladite information représentative de la forme et de la position de l'objet étant utilisée pour masquer des pixels ne devant pas être pris en compte dans ladite estimation.

Dans un mode de réalisation, suite à l'estimation de ladite information représentative du mouvement global de l'objet, dite première information, un filtrage est appliqué à ladite première information afin de garantir des variations régulières du mouvement de l'objet entre deux images successives de la séquence d'images, ledit filtrage comprenant les étapes suivantes : déterminer une première matrice permettant d'estimer un mouvement de l'objet dans un référentiel centré sur un barycentre de l'objet dans la première image et une deuxième matrice permettant d'estimer un mouvement de l'objet dans un référentiel centré sur un barycentre de l'objet dans la deuxième image recalée ; utiliser la première et la deuxième matrices pour calculer une information représentative du mouvement de l'objet, dite seconde information, à partir de ladite première information; utiliser la seconde information pour obtenir une troisième matrice représentative de composantes de translation du mouvement de l'objet ; utiliser la seconde information et la troisième matrice pour obtenir une quatrième matrice représentative de composantes du mouvement de l'objet autres que les composantes de translation ; obtenir une version filtrée de la troisième matrice, dite troisième matrice filtrée, en calculant une somme pondérée entre la troisième matrice et une troisième matrice filtrée obtenue lors de la mise en œuvre dudit procédé sur la deuxième image ; obtenir une version filtrée de la quatrième matrice, dite quatrième matrice filtrée, en calculant une somme pondérée entre la quatrième matrice et une quatrième matrice filtrée obtenue lors de la mise en œuvre du procédé sur la deuxième image ; et, obtenir une information représentative d'un mouvement global filtré de l'objet en utilisant la première et la deuxième matrices, la troisième matrice filtrée et la quatrième matrice filtrée.

Dans un mode de réalisation, la seconde information est calculée de la manière suivante :

$$\overline{dH_k^{Objet}} = V_k^{-1}.dH_k^{Objet}.V_{k-1}$$

où $V_k$ est la première matrice, $V_{k-1}$ est la deuxième matrice, $dH_k^{Objet}$ la première information et $\overline{dH_k^{Objet}}$ la seconde information.

Dans un mode de réalisation, la troisième matrice est calculée de la manière suivante :

$$H_k^t = ApproxT(V_k^{-1}.dH_k^{Objet}.V_{k-1})$$

où $H_k^t$ est la troisième matrice et

*ApproxT(X)* est une approximation en translation de la matrice homographique X.

Dans un mode de réalisation, la quatrième matrice est calculée de la manière suivante :

$$H_k^h = H_k^{t-1}.V_k^{-1}.dH_k^{Objet}.V_{k-1}$$

où $H_k^h$ est la quatrième matrice.

Dans un mode de réalisation, la troisième matrice filtrée est calculée de la manière suivante :

$$H_k^{t\,Filt} = \alpha.H_{k-1}^{t\,Filt} + (1-\alpha)H_k^t$$

où $H_k^{t\,Filt}$ est la troisième matrice filtrée, $H_{k-1}^{t\,Filt}$ est la troisième matrice filtrée obtenue lors de la mise en œuvre dudit procédé sur la deuxième image et a est une constante prédéfinie comprise entre « 0 » et « 1 ».

Dans un mode de réalisation, la quatrième matrice filtrée est calculée de la manière suivante :

$$H_k^{h\,Filt} = \beta.I + (1-\beta)H_k^h$$

où $H_k^{h\,Filt}$ est la quatrième matrice filtrée, *I* est une matrice identité et $\beta$ est une constante prédéfinie comprise entre « 0 » et « 1 ».

Dans un mode de réalisation, l'information représentative d'un mouvement global filtré de l'objet est calculée de la manière suivante :

$$dH_k^{Objet\,Filt} = V_k.H_k^{t\,Filt}.H_k^{h\,Filt}.V_{k-1}^{-1}.$$

Selon un deuxième aspect de l'invention, l'invention concerne un dispositif de restauration d'images d'une séquence d'images selon la revendication 13.

Selon un troisième aspect de l'invention, l'invention concerne un programme d'ordinateur selon la revendication 14.

Selon un quatrième aspect de l'invention, l'invention concerne des moyens de stockage selon la revendication 15.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de contexte dans lequel l'invention peut être mise en œuvre ;
- la Fig. 2 illustre schématiquement un exemple d'image contenant un objet et un fond ;
- la Fig. 3 illustre schématiquement un exemple d'architecture matérielle d'un module de traitement compris dans un système d'acquisition d'images ;
- la Fig. 4 illustre schématiquement un procédé de restauration d'images selon l'invention ;
- la Fig. 5 illustre schématiquement un procédé de segmentation d'images selon l'invention ;
- la Fig. 6 illustre schématiquement un procédé de calcul d'un coût d'un contour d'un objet compris dans le procédé de segmentation selon l'invention ;
- la Fig. 7 illustre schématiquement un procédé d'estimation de mouvement global ; et,
- la Fig. 8 illustre schématiquement un procédé de filtrage de mouvement.

L'invention est décrite par la suite dans un contexte où un système de visualisation comprend un dispositif d'acquisition d'images, un module de traitement et un dispositif de visualisation d'images. L'invention peut toutefois être mise en œuvre dans un contexte où le dispositif d'acquisition d'images, le module de traitement et le dispositif d'affichage sont séparés et distants géographiquement. Dans ce cas, le dispositif d'acquisition d'images, le module de traitement et le dispositif de visualisation d'images comprennent des moyens de communication pour communiquer entre eux.

Par ailleurs, le procédé selon l'invention s'appuie sur un procédé de segmentation basé contours actifs basé contours. Nous montrons par la suite que d'autres types de procédés de segmentation basés contours actifs peuvent être utilisés tels que par exemple, les procédés de segmentation basés contours actifs basés région, les procédés de segmentation basés contours actifs implicites basés ensembles de niveaux (« level sets » en terminologie anglo-saxonne),...

De plus, les images utilisées dans le cadre de l'invention sont essentiellement des images monochromes où chaque pixel d'une image ne possède qu'une composante. L'invention peut toutefois être appliquée à des images multi-composantes dans lesquelles chaque pixel d'une image possède une pluralité de composantes.

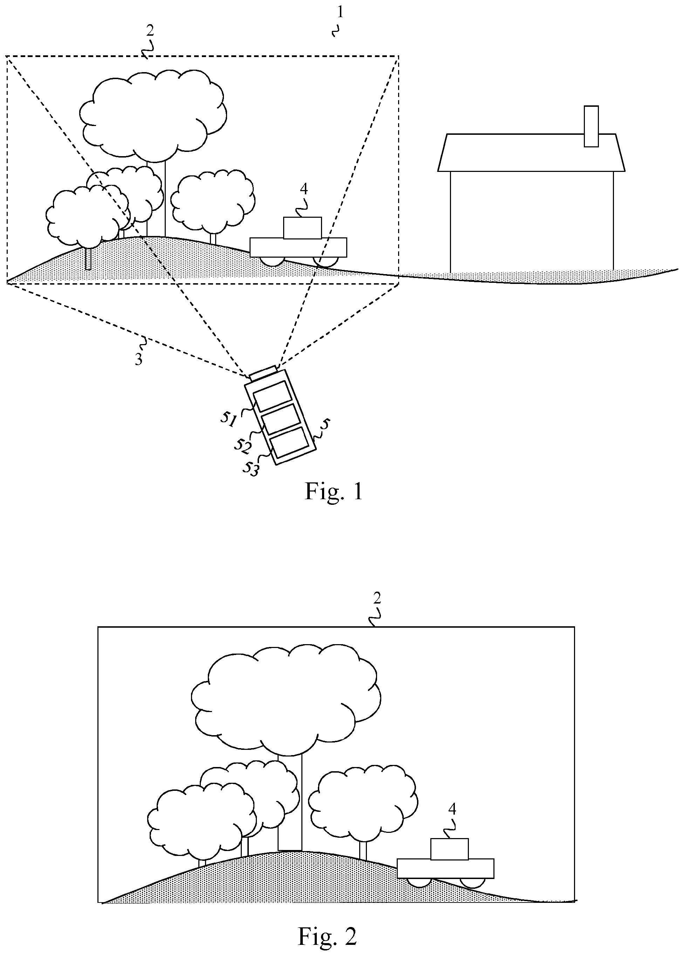

La **Fig. 1** illustre schématiquement un exemple de contexte dans lequel l'invention peut être mise en œuvre.

Dans la Fig. 1, une scène 1 est observée par un système de visualisation 5 suivant un champ optique 3. La scène 1 comprend un objet 4. Le système de visualisation 5 comprend un dispositif d'acquisition d'images 51, un module de traitement 52 apte à mettre en œuvre un procédé de restauration d'images et une méthode de segmentation selon l'invention et un dispositif de visualisation d'images 53. Le dispositif d'acquisition d'images 51 comprend un ensemble optique et un capteur d'images tel que par exemple un capteur CCD (« Charge-Coupled Device » en terminologie anglo-saxonne, dispositif à transfert de charge) ou un capteur CMOS (« Complementarity metal-oxide-semiconductor », en terminologie anglo-saxonne, semi-conducteur métal-oxyde complémentaire). Le capteur d'images fournit une séquence d'images 2 représentatives de la scène 1 selon une fréquence temporelle prédéfinie F (par exemple de F = 25 à 50 images par secondes) au module de traitement 52. Après traitement par le module de traitement 52, le module de traitement 52 fournit des images améliorées au dispositif de visualisation d'images 53. Le dispositif de visualisation d'images 53 est par exemple un écran.

Dans un mode de réalisation, les images fournies par le dispositif d'acquisition d'images 51 sont des images monochromes.

Dans un mode de réalisation, les images fournies par le dispositif de visualisation d'images 51 sont des images multi-composantes.

La Fig. 2 illustre schématiquement un exemple d'image contenant un objet et un fond.

L'exemple décrit en relation avec la Fig. 2 représente une image 2 fournie par le système de visualisation 5. On retrouve dans l'image 2, l'objet 4 (ici un véhicule) se déplaçant sur un fond (ici un paysage). On peut imaginer que le système de visualisation 5 est mobile de sorte que le fond possède un mouvement.

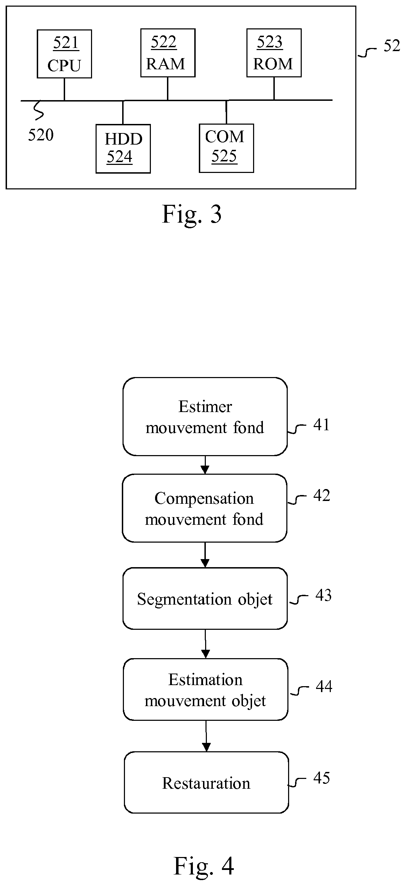

La Fig. 3 illustre schématiquement un exemple d'architecture matérielle du module de traitement 52 compris dans le système de visualisation 5.

Selon l'exemple d'architecture matérielle représenté à la Fig. 3, le module de traitement 52 comprend alors, reliés par un bus de communication 520 : un processeur ou CPU (« Central Processing Unit » en anglais) 521 ; une mémoire vive RAM (« Random Access Memory » en anglais) 522 ; une mémoire morte ROM (« Read Only Memory » en anglais) 523 ; une unité de stockage telle qu'un disque dur ou un lecteur de support de stockage, tel qu'un lecteur de cartes SD (« Secure Digital » en anglais) 524 ; au moins une interface de communication 525 permettant au module de traitement 52 de communiquer avec le dispositif d'acquisition d'images 51 et/ou le dispositif de visualisation d'images 53.

Dans un mode de réalisation dans lequel le dispositif d'acquisition d'images 51, le module de traitement 52 et dispositif de visualisation 53 sont séparés et distants, le dispositif d'acquisition d'images 51 et le dispositif de visualisation 53 comprennent aussi une interface de communication pouvant communiquer avec l'interface de communication 525 par l'intermédiaire d'un réseau tel qu'un réseau sans fils.

Le processeur 521 est capable d'exécuter des instructions chargées dans la RAM 522 à partir de la ROM 523, d'une mémoire externe (non représentée), d'un support de stockage (tel qu'une carte SD), ou d'un réseau de communication. Lorsque le module de traitement 52 est mis sous tension, le processeur 521 est capable de lire de la RAM 522 des instructions et de les exécuter. Ces instructions forment un programme d'ordinateur causant la mise en œuvre, par le processeur 521, de tout ou partie du procédé décrit ci-après en relation avec les Figs. 4 à 8.

Le procédé décrit ci-après en relation avec les Figs. 4 à 8 peut être implémenté sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gâte Array » en anglais) ou un ASIC (« Application-Specific Integrated Circuit » en anglais).

La **Fig. 4** illustre schématiquement un procédé de restauration d'images selon l'invention.

Le procédé décrit en relation avec la Fig. 4 est un procédé itératif, mis en œuvre par le module de traitement 52 sur chaque image d'une séquence d'images fournie par le dispositif d'acquisition d'images 51, excepté la première image de la séquence d'images. Par la suite, nous appelons *image courante,* une image en cours de traitement par le module de traitement 52 et nous notons l'image courante $I_k$, où k représente un indice d'une image. L'indice k indique que l'image $I_k$ apparaît dans la séquence d'images à un instant $T_0 + k.$ $\tau.$ $T_0$ correspond au début de la séquence d'images (et donc à la première image de la séquence) et $\tau = \dfrac{1}{F}$ . Soit $I_{k-1}$, une image, dite *image précédente,* précédant immédiatement l'image courante $I_k$ dans la séquence d'images fournie par le dispositif d'acquisition d'images 51.

Dans une étape 41, le module de traitement 52 estime une information représentative d'un mouvement global d'un arrière-plan de l'image courante $I_k$ (ou mouvement du fond) par rapport à l'image précédente $I_{k-1}$. L'image précédente $I_{k-1}$ est alors une image de référence pour l'image courante $I_k$ pour l'estimation de l'information représentative du mouvement du fond. Cette étape est mise en œuvre par une méthode d'estimation de mouvement global. Une estimation de mouvement global fait l'hypothèse qu'un ensemble de pixels d'une même image est animé d'un même mouvement. Ce mouvement peut être simple, tel qu'un mouvement de translation ou de rotation, ou complexe représenté, par exemple, par une transformation affine ou une homographie. Une homographie est une transformation de coordonnées projective à huit paramètres. Dans un mode de réalisation, le module de traitement considère que le mouvement du fond entre deux images successives de la séquence d'images est représenté par une homographie. Soit $(x,y)$ des coordonnées d'un pixel $P_k^{Fond}$ appartenant au fond dans l'image courante $I_k$ et $(x',y')$ des coordonnées du même pixel $P_{k-1}^{Fond}$ appartenant au fond dans l'image précédente $I_{k-1}$. L'estimation de mouvement global mise en œuvre lors de l'étape 41 consiste à déterminer les huit paramètres d'une homographie permettant de transformer les coordonnées $(x',y')$ de chaque pixel $P_{k-1}^{Fond}$ dans l'image précédente $I_{k-1}$ en coordonnées $(x,y)$ d'un pixel $P_k^{Fond}$ dans l'image courante $I_k$. En déterminant les huit paramètres de l'homographie, on détermine une information représentative d'un mouvement global du fond entre l'image précédente $I_{k-1}$ et l'image courante $I_k$. Nous notons $dH_k^{Fond}$ l'homographie représentative du mouvement global du fond entre l'image précédente $I_{k-1}$ et l'image $I_k$.

Dans une étape 42, le module de traitement 52 compense le mouvement du fond dans l'image précédente $I_{k-1}$ afin d'obtenir une image précédente recalée $I_{k-1}^{rec}$. Pour ce faire, le module de traitement 52 applique l'homographie $dH_k^{Fond}$ trouvée lors de l'étape 41 à l'ensemble des pixels de l'image précédente $I_{k-1}$.

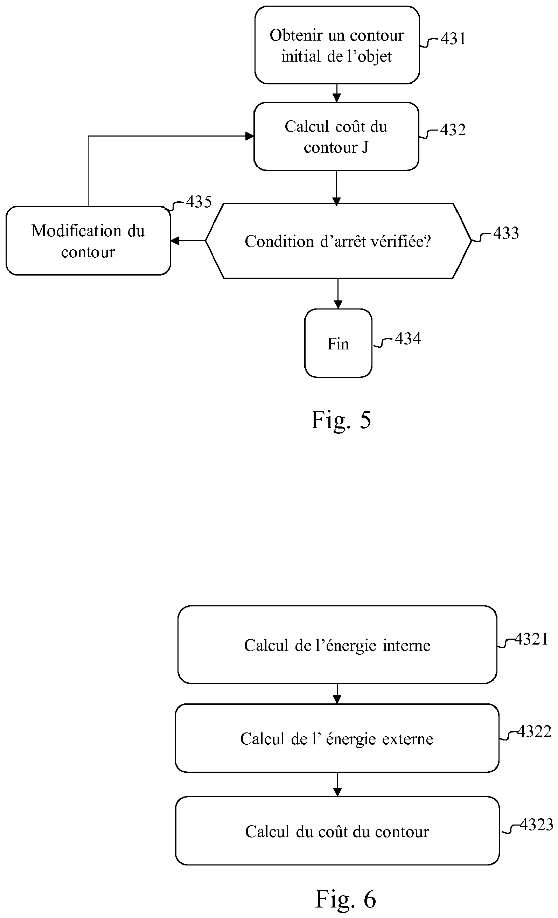

Dans une étape 43, le module de traitement 52 obtient un contour C de l'objet 4 en appliquant un procédé de segmentation à l'image courante $I_k$. Nous décrivons par la suite en relation avec les Figs. 5 et 6 un procédé de segmentation selon l'invention.

Dans une étape 44, le module de traitement 52 estime une information représentative d'un mouvement global de l'objet 4, entre l'image courante et une image précédente. Comme lors de l'étape 41, le module de traitement 52 considère que le mouvement global de l'objet 4 est représenté par une homographie, notée $dH_k^{Objet}$. Dans un mode de réalisation, l'homographie $dH_k^{Objet}$ représentative du mouvement global de l'objet 4 est obtenue en utilisant l'image courante $I_k$ et l'image précédente $I_{k-1}$ et en prenant en compte le mouvement du fond $dH_k^{Fond}$ mesuré lors de l'étape 41. Soit $(x,y)$ des coordonnées d'un pixel $P_k^{Objet}$ appartenant à l'objet 4 dans l'image courante $I_k$ et $(x',y')$ des coordonnées du même pixel $P_{k-1}^{Objet}$ appartenant à l'objet 4 dans l'image précédente $I_{k-1}$. L'estimation de mouvement global mise en œuvre lors de l'étape 44 comprend une détermination des huit paramètres d'une homographie $dH_k^{Mesurée}$ permettant de transformer les coordonnées $(x,y)$ de chaque pixel dans l'image courante $I_k$ en coordonnées $(x',y')$ du pixel $P_{k-1}^{Objet}$ dans l'image précédente $I_{k-1}$. On peut écrire :

$$dH_k^{Mesurée} = dH_k^{Objet}.dH_k^{Fond}$$

L'homographie $dH_k^{Objet}$ représentative est alors obtenue de la manière suivante :

$$dH_k^{Objet} = dH_k^{mesurée}.\left(dH_k^{Fond}\right)^{-1}$$

Dans un mode de réalisation, l'homographie $dH_k^{Objet}$ représentative du mouvement global de l'objet 4 est mesurée entre une image recalée et une image non recalée, ce qui permet de ne pas faire intervenir l'homographie $dH_k^{Fond}$. Par exemple, l'homographie $dH_k^{Objet}$ est mesurée entre l'image précédente recalée $I_{k-1}^{rec}$ et l'image courante $I_k$.

Dans une étape 45, le module de traitement 52 applique une méthode de restauration d'images à l'image courante $I_k$. Dans un mode de réalisation, la méthode de restauration d'images appliquée utilise les informations représentatives du mouvement global du fond et les informations représentatives du mouvement global de l'objet 4 estimées lors des étapes 41 et 44 pour mettre en correspondance les pixels de l'image courante $I_k$ et les pixels de l'image précédente $I_{k-1}$. Soit $P_k$ un pixel de l'image courante $I_k$ et $P_{k-1}$ un pixel de l'image précédente $I_{k-1}$ mis en correspondance avec le pixel $P_k$ en utilisant les homographies $dH_k^{Fond}$ et $dH_k^{Objet}$. Le pixel $P_k$ (respectivement le pixel $P_{k-1}$) possède un nombre entier positif non nul $N_c$ de composantes $C_i^{P_k}$ (respectivement $C_i^{P_{k-1}}$), $i \in [1; N_c]$. Dans ce mode de réalisation, la valeur $C_i^{P_k}$ de chaque composante de chaque pixel $P_k$ de l'image $I_k$ est remplacée par une somme pondérée calculée de la manière suivante :

$$C_i^{P_k} = \frac{W_k . C_i^{P_k} + W_{k-1} . C_i^{P_{k-1}}}{W_k + W_{k-1}}$$

où $W_k$ et $W_{k-1}$ sont des valeurs de pondération prédéfinie. Par exemple, les pondérations $W_k$ et $W_{k-1}$ peuvent être telles que $W_k \leq W_{k-1}$.

Dans un mode de réalisation, la méthode de restauration d'images appliquée utilise une fenêtre d'images comprenant un nombre $N_I$ d'images précédant l'image courante $I_k$. Les pixels de chacune des images sont mis en correspondance en utilisant les informations représentatives du mouvement du fond et du mouvement de l'objet 4 obtenues pour chacune des images de la fenêtre d'images.

Dans ce mode de réalisation, la valeur $C_i^{P_k}$ de chaque composante de chaque pixel $P_k$ de l'image $I_k$ est remplacée par une somme pondérée calculée de la manière suivante :

$$C_i^{P_k} = \frac{\sum_{j=1}^{N_I} W_j . C_i^{P_j}}{\sum_{j=1}^{N_I} W_j}$$

où chaque $W_j$ est une valeur de pondération prédéfinie. On note que la méthode de restauration utilisant une pondération impliquant deux images est un cas particulier de la méthode de restauration basée sur une fenêtre d'images où $N_I = 2$.

Dans un mode de réalisation, seuls les pixels de l'image courante $I_k$ appartenant à l'objet 4 sont restaurés.

Dans un mode de réalisation, plusieurs méthodes de restauration sont utilisées en fonction de l'objet auquel appartient chaque pixel de l'image $I_k$. Une première méthode de restauration est appliquée aux pixels appartenant au fond de l'image courante $I_k$ et une seconde méthode de restauration est appliquée aux pixels appartenant à l'objet 4 dans l'image courante $I_k$. La première méthode de restauration est par exemple la méthode de restauration utilisant une fenêtre d'images dans laquelle la fenêtre d'images comprend deux images. La seconde méthode de restauration est par exemple la méthode de restauration utilisant une fenêtre d'images dans laquelle la fenêtre d'images comprend cinq images.

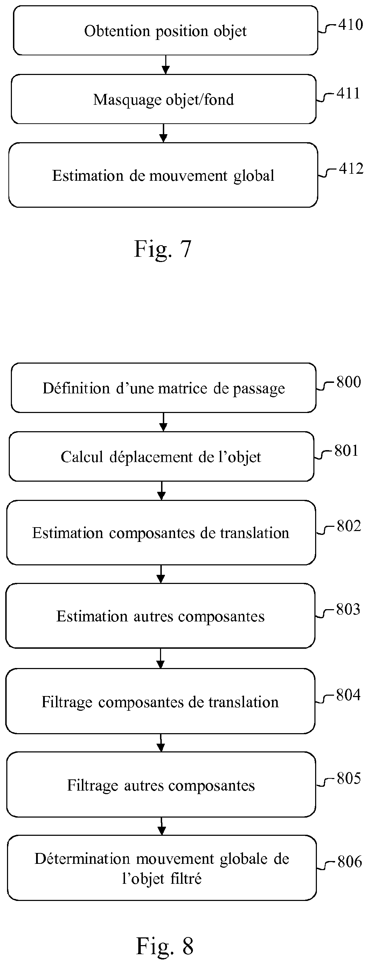

La **Fig. 7** illustre schématiquement un procédé d'estimation de mouvement global.

Le procédé de la Fig. 7 est appliqué par le module de traitement 52 lors de l'étape 41 pour déterminer le mouvement global du fond (i.e. l'homographie $dH_k^{Fond}$ et lors de l'étape 44 pour déterminer le mouvement global de l'objet 4 (i.e. l'homographie $dH_k^{Objet}$).

Lors de l'étape 41, seul le mouvement des pixels correspondant au fond est recherché. Le mouvement des pixels correspondant à l'objet 4 ne doit pas être pris en compte.

Dans une étape 410, le module de traitement obtient une position et une forme de l'objet 4 dans l'image $I_k$.

Dans un mode de réalisation, la forme et la position de l'objet 4 dans l'image $I_k$ sont données par une liste ordonnée de pixels, appelés points de contrôle, appartenant à un contour C de l'objet 4. La liste ordonnée de points de contrôle peut comprendre tous les pixels appartenant au contour C de l'objet 4 ou un sous-ensemble de pixels du contour C permettant d'obtenir une bonne approximation du contour C. Un parcours de la liste ordonnée de points de contrôle permet d'obtenir le contour C.

Dans un mode de réalisation, lors de l'étape 410, le module de traitement 52 fait une hypothèse de mouvement faible de l'objet 4 entre deux images successives de la séquence d'images. Comme dit plus haut, le procédé décrit en relation avec la Fig. 4 est itératif de sorte que lorsque l'image courante $I_k$ est en cours de traitement par ce procédé, l'image précédente $I_{k-1}$ a déjà été traitée par ce procédé. La position et la forme de l'objet 4 dans l'image $I_{k-1}$ sont donc connues. En s'appuyant sur l'hypothèse de mouvement faible, le module de traitement 52 considère que la forme et la position de l'objet 4 dans l'image $I_k$ sont identiques à la forme et la position de l'objet 4 dans l'image $I_{k-1}$. Le module de traitement 52 réutilise donc la liste ordonnée de points de contrôle de l'image $I_{k-1}$ pour définir le contour C dans l'image $I_k$.

La première image de la séquence $I_{k=0}$ est un cas particulier puisque cette image n'est précédée d'aucune autre image. Dans un mode de réalisation, la position et la forme de l'objet 4 dans la première image $I_0$ de la séquence d'images sont données par un opérateur. Pour ce faire, l'opérateur peut détourer l'objet 4 à l'aide d'un dispositif de pointage, tel qu'une souris, sur le dispositif d'affichage 53, qui dans ce cas est un écran tactile. Le fond de la première image est considéré comme ayant un mouvement nul. Par conséquent le mouvement du fond n'a pas à être compensé pour la première image de la séquence. Le procédé décrit en relation avec la Fig. 4 n'est pas appliqué à la première image $I_0$ de la séquence, mais cette image $I_0$ est utilisée dans ce procédé pour déterminer le mouvement du fond et le mouvement de l'objet 4 entre cette image $I_0$ et l'image $I_{k=1}$ qui la suit dans la séquence d'images.

Dans une étape 411, la position et la forme de l'objet dans l'image courante $I_k$ étant connues, le module de traitement masque chaque pixel de l'image courante $I_k$ appartenant à l'objet 4, *i.e.* le module de traitement masque chaque pixel appartenant au contour ou interne au contour de l'objet 4. Dans un mode de réalisation, le module de traitement 52 associe chaque pixel de l'image courante $I_k$ à une première valeur de masque lorsque ledit pixel est masqué et à une seconde valeur de masque lorsque ledit pixel n'est pas masqué. La première valeur de masque est par exemple la valeur « 1 » et la seconde valeur de masque est par exemple la valeur « 0 ».

Dans une étape 412, le module de traitement 52 estime le mouvement global du fond entre l'image courante $I_k$ et l'image précédente $I_{k-1}$ *(i.e.* le module de traitement 52 estime l'homographie $dH_k^{Fond}$ ). Lors de cette estimation seuls les pixels de l'image $I_k$ non masqués *(i.e.* les pixels associés à la deuxième valeur de masque) sont pris en compte. De plus, seuls les pixels de l'image précédente $I_{k-1}$ non masqués sont pris en compte, en utilisant le masque obtenu lors de l'application de la méthode décrite en relation avec la Fig. 4 à l'image précédente $I_{k-1}$. Dans un mode de réalisation, la détermination des huit paramètres de l'homographie $dH_k^{Fond}$ utilise la méthode d'ajustement projectif (« projective fit » en terminologie anglo-saxonne) ou la méthode des flux projectifs (« projective flow » en terminologie anglo-saxonne) décrite dans l'article « Orbite vidéo du groupe projectif: une approche simple de l'estimation sans caractéristiques des paramètres (« video Orbits of the Projective Group : a simple approach to featureless estimation of parameters » en terminologie anglo-saxonne) », Steve Mann and Rosaling W. Picard, IEEE Tr. On Image Processing, Vol. 6, N°. 9, September 1997.

Lors de l'étape 44, seul le mouvement des pixels correspondant à l'objet 4 est recherché. Le mouvement des pixels correspondant au fond ne doit pas être pris en compte.

Lors de l'étape 44, le module de traitement met en œuvre l'étape 410 d'obtention de la position et de la forme de l'objet 4. La position et la forme de l'objet 4 dans l'image courante $I_k$ sont obtenues grâce au résultat de l'étape 43

Lors de l'étape 411, le module de traitement 52 masque chaque pixel de l'image courante $I_k$. appartenant au fond, *i.e.* n'appartenant pas à l'objet 4.

Lors de l'étape 412, le module de traitement 52 estime le mouvement de l'objet entre l'image courante $I_k$ et l'image précédente $I_{k-1}$ *(i.e.* le module de traitement estime l'homographie $dH_k^{mesurée}$ puis en déduit l'homographie $dH_k^{Objet}$ ). Lors de cette estimation seuls les pixels de l'image courante $I_k$ et de l'image précédente $I_{k-1}$ non masqués sont pris en compte. De nouveau, la détermination des huit paramètres de l'homographie $dH_k^{mesurée}$ utilise la méthode d'ajustement projectif ou la méthode des flux projectifs.

Dans un mode de réalisation, lors de la mise en œuvre de l'étape 410 lors de l'étape 41, le module de traitement 52 fait une hypothèse de mouvement continu de l'objet 4 dans la séquence d'images. L'hypothèse de mouvement continu implique que le mouvement de l'objet 4 entre l'image courante $I_k$ et l'image précédente $I_{k-1}$ est le même que le mouvement de l'objet 4 entre l'image précédente $I_{k-1}$ et une image $I_{k-2}$ précédent l'image précédente $I_{k-1}$. Le procédé décrit en relation avec la Fig. 4 étant itératif, lors du traitement de l'image courante $I_k$, le mouvement de l'objet 4 entre l'image précédente $I_{k-1}$ et l'image précédente $I_{k-2}$ est connu. Par ailleurs la position et la forme de l'objet 4 dans l'image précédente $I_{k-1}$ sont elles aussi connues. La position et la forme de l'objet 4 dans l'image courante $I_k$ peuvent donc être trouvées en utilisant une homographie $dH_{k-1}^{mesurée} = dH_{k-1}^{Fond} * dH_{k-1}^{Objet}$ représentant le mouvement de l'objet 4 entre l'image précédente $I_{k-1}$ et l'image précédente $I_{k-2}$. L'homographie $dH_{k-1}^{mesurée}$ est une combinaison d'une homographie $dH_{k-1}^{Fond}$ représentative du mouvement du fond entre l'image précédente $I_{k-1}$ et l'image précédente $I_{k-2}$ et d'une homographie $dH_{k-1}^{Objet}$ représentative du mouvement de l'objet 4 entre l'image précédente $I_{k-1}$ et l'image précédente $I_{k-2}$. L'homographie $dH_{k-1}^{mesurée}$ est appliquée à l'objet 4 dans l'image précédente $I_{k-1}$. Plus précisément l'homographie $dH_{k-1}^{mesurée}$ est appliquée aux points de contrôle de la liste ordonnée de points de contrôle représentant le contour de l'objet 4 dans l'image précédente $I_{k-1}$ afin d'obtenir la liste ordonnée de points de contrôle représentant le contour de l'objet 4 dans l'image $I_k$. L'hypothèse de mouvement continu est applicable lors de la mise en œuvre de l'étape 410 lors de l'étape 44.

Dans un mode de réalisation, pour prendre en compte que les hypothèses de mouvement faible et de mouvement continu ne permettent d'obtenir qu'une approximation de la forme et la position de l'objet 4 dans l'image courante $I_k$, une dilatation est appliquée au contour de l'objet 4 dans l'image courante $I_k$. La dilatation est obtenue par exemple en utilisant une méthode de morphologie mathématique.

Dans d'autres modes de réalisation, d'autres méthodes d'estimation des paramètres d'une homographie connues peuvent être utilisées.

Dans d'autres modes de réalisation, le module de traitement considère que le mouvement entre deux images successives de la séquence d'images est représenté par d'autres modèles de mouvement telles qu'une translation, une rotation, une transformation affine ou une transformation bilinéaire.

Dans un mode de réalisation, préalablement à chaque estimation de mouvement global (du fond ou de l'objet 4), chaque image impliquée dans l'estimation de mouvement global est interpolée au demi, au quart ou au huitième de pixel. De cette manière, la précision de l'estimation de mouvement global est améliorée.

La méthode d'ajustement projectif (respectivement la méthode des flux projectifs) consiste à trouver parmi un ensemble de paramètres d'un modèle de mouvement (ici les 8 paramètres d'une homographie), les paramètres du modèle de mouvement minimisant une métrique représentative d'une erreur entre un mouvement réel d'un objet dans une image et un mouvement de l'objet représenté par le modèle de mouvement. Dans la méthode d'ajustement projectif (respectivement la méthode des flux projectifs), chaque combinaison possible de paramètres du modèle de mouvement est testée. Une telle méthode exhaustive de recherche des paramètres du modèle de mouvement peut avoir un coût calculatoire important. Il est possible de réduire le coût calculatoire de la méthode d'ajustement projectif (respectivement la méthode des flux projectifs) en utilisant, par exemple, un algorithme de descente de gradient plutôt qu'une recherche exhaustive. Toutefois, un problème connu des méthodes de descente de gradient est que, lorsque la métrique à minimiser possède plusieurs minimums locaux, la méthode de descente de gradient peut converger vers un minimum local qui n'est pas un minimum global, i.e. qui n'est pas la valeur minimale que peut prendre la métrique. Une méthode permettant d'assurer une convergence rapide vers le minimum global de la métrique consiste à initialiser la méthode de descente de gradient avec une valeur proche du minimum global recherché. Dans un mode de réalisation, la recherche exhaustive des paramètres du modèle de mouvement de la méthode d'ajustement projectif (respectivement la méthode des flux projectifs) est remplacée par une méthode de descente de gradient lors de la mise en œuvre de l'étape 412 lors des étapes 41 et 44.

Lors de la mise en œuvre de l'étape 41 sur l'image $I_k$, la méthode de descente de gradient est initialisée à une valeur $dH_{k-1}^{Fond}$ représentative du mouvement du fond trouvé pour l'image $I_{k-1}$. Plus précisément, les huit paramètres de l'homographie $dH_{k-1}^{Fond}$ représentative du mouvement du fond entre l'image précédente $I_{k-1}$ et l'image précédente

$I_{k-2}$ sont utilisés pour initialiser les huit paramètres de l'homographie $dH_k^{Fond}$ représentative du mouvement du fond entre l'image courante $I_k$ et l'image précédente $I_{k-1}$ dans la méthode de descente de gradient.

De même, lors de la mise en œuvre de l'étape 44 sur l'image $I_k$, la méthode de descente de gradient est initialisée à une valeur $\left(dH_{k-1}^{Objet} * dH_k^{Fond}\right)$. Plus précisément, les huit paramètres de l'homographie $\left(dH_{k-1}^{Objet} * dH_k^{Fond}\right)$ sont utilisés pour initialiser les huit paramètres de l'homographie $dH_k^{mesurée}$ représentative du mouvement de l'objet 4 mesuré entre l'image courante $I_k$ et l'image précédente $I_{k-1}$ dans la méthode de descente de gradient. L'homographie $dH_k^{Objet}$ est ensuite déduite de l'homographie $dH_k^{mesurée}$ et de l'homographie $dH_k^{Fond}$

. Dans un mode de réalisation, suite à l'estimation de l'information représentative du mouvement de l'objet 4 entre l'image courante $I_k$ et l'image précédente recalée $I_{k-1}$ (*i.e.* suite à l'estimation des huit paramètres de l'homographie $dH_k^{Objet}$), l'information représentative du mouvement estimé est filtrée afin de garantir des variations régulières du mouvement de l'objet entre deux images successives de la séquence d'images. La méthode décrite en relation avec la Fig. 4 est particulièrement efficace lorsqu'une hypothèse de mouvement inertiel de l'objet 4 est vérifiée. Lorsque les informations de mouvement estimées de l'objet 4 sont trop variables, il est préférable de corriger ces informations afin qu'elles se rapprochent d'informations de mouvement compatibles avec l'hypothèse de mouvement inertiel. La Fig. 8 décrit un procédé de filtrage de mouvement permettant de corriger des informations de mouvement. Le procédé décrit en relation avec la Fig. 4 n'utilise alors plus les informations de mouvement estimées mais les informations de mouvement estimées corrigées.

La Fig. 8 illustre schématiquement un procédé de filtrage de mouvement.

Le procédé décrit en relation avec la Fig. 8 permet de garantir des variations régulières du mouvement de l'objet 4 entre deux images successives de la séquence d'images.

Dans une étape 800, le module de traitement 52 détermine une matrice de passage $V_k$ (respectivement une matrice de passage $V_{k-1}$) permettant d'estimer un mouvement de l'objet dans un référentiel centré sur un barycentre de l'objet 4 dans l'image courante $I_k$ (respectivement dans l'image précédente recalée $I_{k-1}^{rec}$).

$$V_k = \begin{bmatrix} 1 & 0 & x_k^b \\ 0 & 1 & y_k^b \\ 0 & 0 & 1 \end{bmatrix}$$

$$V_{k-1} = \begin{bmatrix} 1 & 0 & x_{k-1}^b \\ 0 & 1 & y_{k-1}^b \\ 0 & 0 & 1 \end{bmatrix}$$

où $(x_k^b, y_k^b)$ (respectivement $(x_{k-1}^b, y_{k-1}^b)$) sont des coordonnées du barycentre de l'objet 4 dans l'image courante $I_k$ (respectivement dans l'image précédente recalée $I_{k-1}^{rec}$).

Dans une étape 801, le module de traitement 52 calcule une information $\overline{dH_k^{Objet}}$ représentative du mouvement de l'objet 4 dans le référentiel centré sur le barycentre de l'obet 4.

$$\overline{dH_k^{Objet}} = V_k^{-1}.dH_k^{Objet}.V_{k-1} = \begin{bmatrix} . & . & T_x \\ . & . & T_y \\ . & . & . \end{bmatrix}$$

Les coefficients de la matrice $dH_k^{Objet}$ notés « . » sont des coefficients qui ne sont pas utilisés par la suite du fait d'une approximation mise en œuvre lors d'une étape suivante 802.

Dans l'étape 802, le module de traitement 52 obtient une matrice $H_k^t$ représentative de composantes de translation du mouvement de l'objet 4 entre l'image courante $I_k$ et l'image précédente recalée $I_{k-1}^{rec}$ (représenté par l'homographie $dH_k^{Objet}$) dans le référentiel centré sur le barycentre de l'objet 4 de la manière suivante :

$$H_k^t = ApproxT(V_k^{-1}.dH_k^{Objet}.V_{k-1}) = \begin{bmatrix} 1 & 0 & T_x \\ 0 & 1 & T_y \\ 0 & 0 & 1 \end{bmatrix}$$

où $T_x$ et $T_y$ sont des paramètres d'une translation et *ApproxT(X)* est une approximation en translation de la matrice homographique X.

Dans une étape 803, le module de traitement 52 obtient une matrice $H_k^h$ représentative de composantes du mouvement de l'objet 4 entre l'image courante $I_k$ et l'image précédente recalée $I_{k-1}^{rec}$ autres que les composantes de translation de la manière suivante :

$$H_k^h = H_k^{t^{-1}}.V_k^{-1}.dH_k^{Objet}.V_{k-1}$$

Les composantes du mouvement de l'objet 4 autres que les composantes de translation peuvent être par exemple des composantes de rotation, de zoom, etc.

Dans une étape 804, le module de traitement 52 filtre les composantes de translation du mouvement de l'objet 4 entre l'image courante $I_k$ et l'image précédente recalée $I_{k-1}^{rec}$ comme suit :

$$H_k^{t^{Filt}} = \alpha.H_{k-1}^{t^{Filt}} + (1-\alpha)H_k^t$$

où $H_{k-1}^{t^{Filt}}$ est une matrice représentative des composantes de translation filtrées du mouvement de l'objet 4 entre l'image précédente $I_{k-1}$ et l'image précédente recalée $I_{k-2}^{rec}$ et $\alpha$ est une constante prédéfinie comprise entre « 0 » et « 1 ». Dans un mode de réalisation, $\alpha$ = 0.8.

Dans une étape 805, le module de traitement 52 filtre les composantes du mouvement de l'objet 4 entre l'image courante $I_k$ et l'image précédente recalée $I_{k-2}^{rec}$ autres que les composantes de translation de la manière suivante :

$$H_k^{h^{Filt}} = \beta.I + (1-\beta)H_k^h$$

où $H_k^{h^{Filt}}$ est une matrice représentative des composantes filtrées du mouvement de l'objet 4 autres que les composantes de translation, *I* est une matrice identité de taille 3 x 3 et $\beta$ est une constante prédéfinie comprise entre « 0 » et « 1 ». Dans un mode de réalisation $\beta$ = 0.5.

Dans une étape 806, le module de traitement 52 détermine une information $dH_k^{Objet^{Filt}}$ représentative du mouvement global filtré de l'objet 4 de la manière suivante :

$$dH_k^{Objet^{Filt}} = V_k.H_k^{t^{Filt}}.H_k^{h^{Filt}}.V_k^{-1}$$

Dans le mode de réalisation dans lequel le mouvement estimé est filtré afin de garantir des variations faibles du mouvement de l'objet entre deux images successives de la séquence d'images, le mouvement global filtré de l'objet 4 représenté par l'homographie filtrée $dH_k^{Objet\,Filt}$ remplace le mouvement global de l'objet 4 représenté par l'homographie $dH_k^{Objet}$ lors de la restauration de l'image courante $I_k$.

La Fig. 5 illustre schématiquement un procédé de segmentation d'images selon l'invention.

Le procédé décrit en relation avec la Fig. 5 est mis en œuvre lors de l'étape 43. Dans un mode de réalisation, le procédé de segmentation d'images mis en œuvre lors de l'étape 43 est un procédé de segmentation basé contours actifs. Un principe des procédés de segmentation basés contours actifs est de définir un contour initial au voisinage d'un objet puis de modifier itérativement ce contour pour qu'il épouse au mieux la forme de l'objet. A chaque itération, le contour de l'objet obtenu lors d'une itération précédente, dit contour précédent, est modifié de sorte à obtenir un contour de l'objet, dit contour courant, tel qu'un coût du contour courant soit inférieur à un coût du contour précédent. Dans les procédés de segmentation basés contours actifs, le coût d'un contour est fonction d'une énergie interne et d'une énergie externe du contour. Nous donnons par la suite des exemples de méthodes de calcul de valeurs représentatives d'une énergie interne et d'une énergie externe d'un contour. Un contour final de l'objet est obtenu lorsqu'une condition prédéfinie d'arrêt du procédé de segmentation basé contours actifs est remplie. Une condition d'arrêt peut par exemple être un nombre maximum d'itérations ou une obtention d'un écart entre deux coûts de contours obtenus dans deux itérations successives inférieures à un seuil prédéfini. On note que plus le contour initial est proche du contour réel de l'objet, plus le procédé de segmentation basé contours actifs converge rapidement vers un contour proche du contour réel de l'objet. Un choix judicieux d'une position et d'une forme du contour initial permet donc d'améliorer des performances du procédé de segmentation basé contours actifs. Dans un mode de réalisation le procédé de segmentation basé contours actifs est basé contour.

Dans une étape 431, le module de traitement 52 obtient un contour C initial de l'objet 4 dans l'image courante $I_k$.

Dans un mode de réalisation, lors de l'étape 431, le module de traitement fait l'hypothèse de mouvement faible de l'objet 4 entre l'image courante $I_k$ et l'image précédente $I_{k-1}$. Dans ce cas, comme lors de la mise en œuvre de l'étape 411 lors de l'étape 44, le module de traitement 52 réutilise la liste ordonnée de points de contrôle déterminée lors de la mise en œuvre du procédé décrit en relation avec la Fig. 4 sur l'image précédente $I_{k-1}$ pour obtenir le contour C initial de l'objet dans l'image courante $I_k$.

Dans une étape 432, le module de traitement 52 calcule un coût du contour courant C en appliquant un procédé que nous décrivons par la suite en relation avec la Fig. 6. Lors de la première itération du procédé de segmentation basé contours actifs décrit en relation avec la Fig. 5, le contour courant C est le contour C initial.

Dans une étape 433, le module de traitement 52 vérifie si une condition d'arrêt du procédé de segmentation basé contours actifs est remplie. Dans un mode de réalisation, ledit procédé itératif s'arrête lorsqu'un nombre d'itérations du procédé de segmentation basé contours actifs atteint un nombre d'itérations maximal.

Lorsque la condition d'arrêt est remplie, le procédé de segmentation basé contours actifs prend fin lors de l'étape 434 et le module de traitement 52 met en œuvre l'étape 44 déjà expliquée.

Lorsque la condition d'arrêt n'est pas remplie, le module de traitement 52 met en œuvre une étape 435. Lors de l'étape 435, le module de traitement 52 met en œuvre une procédure de raffinement du contour C de l'objet 4 obtenu lors de l'itération précédente du procédé de segmentation basé contour actif. Lors de l'étape 435, le module de traitement 52 modifie le contour C de l'objet 4 obtenu lors de l'itération précédente du procédé de segmentation basé contour actif, dit contour précédent, de sorte à obtenir un contour C de l'objet, dit contour courant, tel qu'un coût du contour courant soit inférieur à un coût du contour précédent. La modification du contour C utilise, par exemple, une méthode décrite dans l'article « snakes : Active Contour Models » Michael Kass, Andrew Witkin, Demetri Terzopoulos, International Journal of Computer Vision, 321-331 (1988), 1987 Kluwer Academic Publishers, Boston.

L'étape 435 est suivie de l'étape 432.

Dans un mode de réalisation, lors de l'étape 431, le module de traitement fait l'hypothèse de mouvement continu de l'objet 4 entre l'image courante $I_k$ et l'image précédente $I_{k-1}$. Dans ce cas, le module de traitement 52 déplace les points de contrôle de la liste ordonnée de points de contrôle pour obtenir le contour C initial de l'objet 4 dans l'image courante $I_k$. Ces points de contrôle, déterminée lors de la mise en œuvre du procédé décrit en relation avec la Fig. 4 sur l'image précédente $I_{k-1}$, sont déplacés du mouvement de l'objet 4 représenté par l'homographie $dH_{k-1}^{Objet} * dH_k^{Fond}$.

Dans un mode de réalisation, les points de contrôle de la liste ordonnée de points de contrôle sont déplacés du mouvement filtré de l'objet 4 représenté par l'homographie $dH_{k-1}^{Fond} * dH_{k-1}^{Objet\,Filt}$ pour obtenir le contour C initial de l'objet 4 dans l'image courante $I_k$.

La Fig. 6 illustre schématiquement un procédé de calcul d'un coût d'un contour d'un objet compris dans le procédé de segmentation selon l'invention.

Le procédé décrit en relation avec la Fig. 6 est mis en œuvre lors de l'étape 432. Dans une étape 4321, le module de traitement 52 calcule une énergie interne $E_{int}$ du contour C de la manière suivante :

$$E_{int} = a. \sum_{i=1}^{N} \left| C'_{PC_i} \right|^2 + b. \sum_{i=1}^{N} \left| C''_{PC_i} \right|^2$$

où $a$ et $b$ sont des constantes prédéfinies égales par exemple à la valeur « 0.01 », $N$ est un nombre de points de contrôle dans la liste de points de contrôle représentant la courbe C, $PC_i$ est le $i$-ème point de contrôle de la liste de points de contrôle représentant la courbe C dans l'image courante $I_k$, $C'_{PC_i}$ est une dérivée première locale de la courbe C dans l'image courante $I_k$ calculée au niveau du point de contrôle $PC_i$, et $C''_{PC_i}$ est une dérivée seconde locale de la courbe C dans l'image courante $I_k$ calculée au niveau du point de contrôle $PC_i$.

Dans une étape 4322, le module de traitement 52 calcule une énergie externe $E_{ext}$ du contour C de la manière suivante :

$$E_{ext} = -(W_{edge}.E_{edge} + W_{mvt}.E_{mvt})$$

où $W_{edge}$ et $W_{mvt}$ sont des constantes prédéfinies par exemple égales à la valeur « 1 ». $E_{edge}$ est une énergie, dite énergie de contour, calculée sur une image de module de gradient $I_k^{grad}$ obtenue à partir de l'image courante $I_k$ :

$$E_{edge} = \sum_{i=1}^{N} I_k^{grad}(PC_i)$$

où $I_k^{grad}(PC_i)$ est une valeur de module de gradient de l'image $I_k^{grad}$ correspondant à la position du point de contrôle $PC_i$.

On note que différentes méthodes de calcul d'une image de module de gradient sont applicables ici. Pour obtenir l'image de de module gradient $I_k^{grad}$ on peut par exemple appliquer à chaque pixel de l'image $I_k$ :

- une combinaison linéaire de pixels adjacents dudit pixel, chaque pixel adjacent étant pondéré par un poids, la somme desdits poids étant égale à zéro, puis calculer l'amplitude *(i.e.* le module) de cette combinaison linéaire ;
- un filtre de Sobel ;
- un filtre de Canny ;
- ...

Dans un mode de réalisation, l'image $I_k^{grad}$ n'est pas calculée, et les valeurs de module de gradient utilisés dans le calcul de l'énergie de contour $E_{edge}$ sont calculées uniquement aux positions des $N$ points de contrôle $PC_i$.

$E_{mvt}$ est une énergie dépendante du mouvement de l'objet 4 entre l'image courante $I_k$ et l'image recalée précédente $I_{k-1}^{rec}$ :

$$E_{mvt} = \sum_{i=1}^{N} |I_k(PC_i) - I_{k-1}^{rec}(PC_i)|$$

où $I_k(PC_i)$ est une valeur d'un pixel de l'image courante $I_k$ correspondant au point de contrôle $PC_i$ et $I_{k-1}^{rec}(PC_i)$ est une valeur d'un pixel de l'image $I_{k-1}^{rec}$ situé à la même position que le pixel de l'image $I_k$ correspondant au point de contrôle $PC_i$.

Dans une étape 4323, le module de traitement 52 calcule le coût $J$ du contour courant $C$ de la manière suivante :

$$J = E_{ext} + E_{int}$$

On constate donc que le mouvement de l'objet 4 est pris en compte dans le procédé de segmentation selon l'invention ce qui permet d'obtenir une meilleure segmentation de l'objet. La minimisation du coût $J$ permet de maximiser $E_{mvt}$ et $E_{edge}$ sur les points de contrôle du contour, afin de favoriser les zones à forts gradients spatiaux et/ou temporels.

Le principe de l'invention reste le même dans le cas d'une utilisation d'un autre type de procédés de segmentation basés contours actifs que les procédés de segmentation basés contours actifs basé contour. Chaque procédé de segmentation basé contours actifs comprend une estimation d'une énergie externe $E_{ext}$. Toutefois, les procédés de segmentation basés contours actifs étant adaptés à des images fixes, ils ne prennent pas en compte les mouvements dans une séquence d'images lors de la segmentation. L'invention permet de prendre en compte ces mouvements en intégrant une énergie représentative du mouvement dans l'estimation de l'énergie externe $E_{ext}$. Ce principe s'applique aux énergies externes $E_{ext}$ calculées dans le cadre des procédés de segmentation basés contours actifs basés régions et des procédés de segmentation basés contours actifs basés ensembles de niveaux.

Jusque-là nous avons considéré des images ne comprenant qu'un objet. L'invention s'applique lorsque les images de la séquence d'images comprennent une pluralité d'objets. Lors des étapes 41 et 42, chaque objet est masqué lors de l'estimation et la compensation du mouvement du fond dans une image. Les étapes 43, 44 et 45 sont mises en œuvre indépendamment sur chaque objet.

Par ailleurs, jusque-là, nous avons considéré que l'objet 4 était rigide et que par conséquent la forme apparente de l'objet était approximativement constante. Dans un cas réel, suivant les mouvements de l'objet et/ou de la caméra, l'objet peut être vu selon des angles de vue différents ce qui peut provoquer des déformations dans la forme apparente de l'objet. Dans un mode de réalisation, lorsqu'une variation de la forme de l'objet sur une pluralité d'images successives de la séquence d'images dépasse un seuil prédéfini, le module de traitement 52 considère que l'objet apparaissant dans les images a changé. Dans ce cas, lorsque le module de traitement 52 détecte un changement d'objet, il considère qu'une nouvelle séquence d'images démarre et invite l'opérateur à détourer à nouveau l'objet. Dans un autre mode de réalisation, le module de traitement 52 applique le procédé de segmentation décrit en relation avec la Fig. 5 quelles que soient les variations de la forme de l'objet, sans demander d'intervention d'un opérateur.

Dans un mode de réalisation, lorsque les images fournies par le dispositif d'acquisition d'images sont des images multi-composantes, le module de traitement 52 applique le procédé de restauration décrit en relation avec la Fig. 4 à chaque composante indépendamment. Chaque composante peut ensuite être affichée indépendamment ou en combinaison avec une ou plusieurs autres composantes sur le dispositif de visualisation 53.

Dans un mode de réalisation, lorsque les images fournies par le dispositif d'acquisition d'images sont des images multi-composantes, le module de traitement 52 applique le procédé de restauration décrit en relation avec la Fig. 4 à au moins une des composantes, ou à au moins une composante calculée à partir des composantes disponibles dans les images. Seule l'étape de restauration 45 est appliquée à chaque composante indépendamment en utilisant les informations représentatives du mouvement du fond et du mouvement de l'objet 4 obtenues lors des étapes précédentes. Chaque composante peut ensuite être affichée indépendamment ou en combinaison avec une ou plusieurs autres composantes sur le dispositif de visualisation 53. Par exemple, lorsque les images multi-composantes comprennent une composante de luminance et deux composantes de chrominance, le procédé de restauration décrit en relation avec la Fig. 4 est appliqué uniquement à la composante de luminance, l'étape de restauration 45 étant appliquée aux trois composantes.

**Revendications**

1. Procédé de restauration d'images d'une séquence d'images comprenant une première image et une seconde image précédent ladite première image, lesdites premières et secondes images comprenant un objet en mouvement sur un arrière-plan, dans lequel le procédé comprend lorsqu'il est appliqué à une première image de la séquence d'images :

   estimer (41) une information représentative d'un mouvement global d'un arrière-plan de la première image par rapport à une deuxième image ;
   compenser (42) le mouvement global de l'arrière-plan dans la deuxième image en utilisant ladite information représentative du mouvement global de l'arrière-plan afin d'obtenir une version recalée de la deuxième image, dite deuxième image recalée ;
   obtenir (43) un contour dudit objet de la première image en appliquant un procédé de segmentation, ledit procédé de segmentation étant itératif et comprenant, lors d'une itération,

   une modification (435) d'un contour de l'objet dans la première image obtenue lors d'une itération précédente dudit procédé de segmentation, dit contour précédent, de sorte à obtenir un contour de l'objet dans la première image, dit contour courant, tel qu'un coût du contour courant soit inférieur à un coût du contour précédent, un contour final de l'objet étant obtenu lorsqu'une condition prédéfinie d'arrêt dudit procédé de segmentation est remplie (433),
   le coût d'un contour de l'objet dans la première image étant une somme (4323) entre une première valeur représentative d'une énergie interne audit contour et une seconde valeur représentative d'une énergie externe audit contour,
   l'énergie externe audit contour étant égale à une somme pondérée d'une énergie dépendante d'un mouvement global de l'objet entre la première image et la seconde image recalée et d'une énergie, dite énergie de contour, correspondant à une somme de valeurs de modules de gradient calculées pour des pixels d'un deuxième ensemble de pixels appartenant au contour courant de l'objet ;
   une valeur représentative de l'énergie dépendante d'un mouvement global de l'objet entre la première image et la seconde image étant calculée sous forme d'une somme de différences entre des valeurs représentatives de pixels d'un premier ensemble de pixels de la première image appartenant au contour courant et des valeurs représentatives de pixels situés aux mêmes positions spatiales que les pixels du premier ensemble de pixels dans la seconde image ;
   estimer (44) une information représentative d'un mouvement global de l'objet délimité par ledit contour obtenu ; et,
   appliquer (45) à la première image une méthode de restauration d'images permettant, pour au moins chaque pixel de la première image appartenant à l'objet délimité par ledit contour obtenu, de remplacer chaque composante dudit pixel par une composante égale à une somme pondérée de ladite composante dudit pixel et d'au moins une composante d'un pixel d'au moins la deuxième image mis en correspondance avec ledit pixel de la première image en utilisant les informations représentatives du mouvement global de l'arrière-plan et du mouvement global de l'objet estimées.

2. Procédé selon la revendication 1, dans lequel pour calculer la valeur représentative de l'énergie interne au contour courant, une dérivée première locale et une dérivée seconde locale du contour sont calculées pour des pixels d'un troisième ensemble de pixels de l'image courante appartenant au contour courant de l'objet, ladite valeur représentative de l'énergie interne étant fonction desdites dérivées calculées.

3. Procédé selon la revendication 2, dans lequel les premier, deuxième et troisième ensembles de pixels sont identiques, et chaque ensemble comprend au moins une sous-partie des pixels de l'image courante appartenant au contour courant de l'objet.

4. Procédé selon l'une quelconque des revendications précédentes, dans lequel lors d'une première itération dudit procédé, un contour initial de l'objet dans l'image courante est obtenu (431) à partir d'un contour final obtenu lors d'une application du procédé de segmentation à l'image de référence ou d'un contour spécifié par un opérateur dans l'image de référence.

5. Procédé selon l'une quelconque des revendications précédentes, dans lequel lors de chaque estimation d'une information représentative d'un mouvement global, une information représentative de la forme et de la position de l'objet est obtenue, ladite information représentative de la forme et de la position de l'objet étant utilisée pour masquer des pixels ne devant pas être pris en compte dans ladite estimation.

6. Procédé selon la revendication 5, dans lequel suite à l'estimation de ladite information représentative du mouvement global de l'objet, dite première information, un filtrage est appliqué à ladite première information afin de garantir des variations régulières du mouvement de l'objet entre deux images successives de la séquence d'images, ledit filtrage comprenant les étapes suivantes :

déterminer (800) une première matrice permettant d'estimer un mouvement de l'objet dans un référentiel centré sur un barycentre de l'objet dans la première image recalée et une deuxième matrice permettant d'estimer un mouvement de l'objet dans un référentiel centré sur un barycentre de l'objet dans la deuxième image recalée ;
utiliser la première et la deuxième matrices pour calculer (801) une information représentative du mouvement de l'objet dans ledit référentiel, dite seconde information, à partir de ladite première information ;
utiliser la seconde information pour obtenir (802) une troisième matrice représentative de composantes de translation du mouvement de l'objet ;
utiliser la seconde information et la troisième matrice pour obtenir (803) une quatrième matrice représentative de composantes du mouvement de l'objet autres que les composantes de translation ;
obtenir (804) une version filtrée de la troisième matrice, dite troisième matrice filtrée courante, en calculant une somme pondérée entre la troisième matrice et une troisième matrice filtrée précédente obtenue lors de la mise en œuvre dudit procédé sur la deuxième image ;
obtenir (805) une version filtrée de la quatrième matrice, dite quatrième matrice filtrée courante, en calculant une somme pondérée entre la quatrième matrice et une quatrième matrice filtrée précédente obtenue lors de la mise en œuvre du procédé sur la deuxième image ; et,
obtenir une information représentative d'un mouvement global filtré de l'objet en utilisant la première et la deuxième matrices, la troisième matrice filtrée courante et la quatrième matrice filtrée courante.

7. Procédé selon la revendication 6, dans lequel la seconde information est calculée de la manière suivante :

$$\overline{dH_k^{Objet}} = V_k^{-1} . dH_k^{Objet} . V_{k-1}$$

où $V_k$ est la première matrice, $V_{k-1}$ est la deuxième matrice, $dH_k^{Objet}$ la première information et $\overline{dH_k^{Objet}}$ la seconde information.

8. Procédé selon la revendication 7, dans lequel la troisième matrice est calculée de la manière suivante :

$$H_k^t = ApproxT(V_k^{-1} . dH_k^{Objet} . V_{k-1})$$

où $H_k^t$ est la troisième matrice et *ApproxT(X)* est une approximation en translation d'une matrice homographique X.

9. Procédé selon la revendication 8, dans lequel la quatrième matrice est calculée de la manière suivante :

$$H_k^h = H_k^{t^{-1}} . V_k^{-1} . dH_k^{Objet} . V_{k-1}$$

où $H_k^h$ est la quatrième matrice.

10. Procédé selon la revendication 9, dans lequel la troisième matrice filtrée courante est calculée de la manière suivante :

$$H_k^{t^{Filt}} = \alpha . H_{k-1}^{t^{Filt}} + (1 - \alpha) H_k^t$$

où $H_k^{t^{Filt}}$ est la troisième matrice filtrée courante, $H_{k-1}^{t^{Filt}}$ est la troisième matrice filtrée précédente obtenue lors de la mise en œuvre dudit procédé sur la deuxième image et $\alpha$ est une constante prédéfinie comprise entre « 0 » et « 1 ».

**11.** Procédé selon la revendication 10, dans lequel la quatrième matrice filtrée courante est calculée de la manière suivante :

$$H_k^{h\,Filt} = \beta \cdot I + (1 - \beta)H_k^h$$

où $H_k^{h\,Filt}$ est la quatrième matrice filtrée courante, $I$ est une matrice identité et $\beta$ est une constante prédéfinie comprise entre « 0 » et « 1 ».

**12.** Procédé selon les revendications 10 et 11, dans lequel l'information représentative d'un mouvement global filtré de l'objet est calculée de la manière suivante :

$$dH_k^{Objet\,Filt} = V_k.H_k^{t\,Filt}.H_k^{h\,Filt}.V_{k-1}^{-1}.$$

**13.** Dispositif de restauration d'images d'une séquence d'images comprenant une première image et une seconde image précédent ladite première image, lesdites premières et secondes images comprenant un objet en mouvement sur un arrière-plan, dans lequel le dispositif comprend lorsqu'il est appliqué à une première image de la séquence d'images :

des moyens d'estimation pour estimer (41) une information représentative d'un mouvement global d'un arrière-plan de la première image par rapport à une deuxième image ;
des moyens de compensation de mouvement pour compenser (42) le mouvement global de l'arrière-plan dans la deuxième image en utilisant ladite information représentative du mouvement global de l'arrière-plan afin d'obtenir une version recalée de la deuxième image, dite deuxième image recalée ;
des moyens d'obtention de contours pour obtenir (43) un contour dudit objet de la première image en utilisant des moyens de segmentation,
lesdits moyens de segmentation comprenant :

des moyens de modification pour modifier (435) un contour de l'objet dans la première image obtenue lors d'une application précédente de ladite segmentation, dit contour précédent, de sorte à obtenir un contour de l'objet dans la première image, dit contour courant, tel qu'un coût du contour courant soit inférieur à un coût du contour précédent, un contour final de l'objet étant obtenu lorsqu'une condition prédéfinie d'arrêt des modifications du contour est remplie (433), le coût d'un contour de l'objet dans la première image étant une somme (4323) entre une première valeur représentative d'une énergie interne audit contour et une seconde valeur représentative d'une énergie externe audit contour, l'énergie externe audit contour étant égale à une somme pondérée d'une énergie dépendante d'un mouvement global de l'objet entre la première image et la seconde image recalée et d'une énergie, dite énergie de contour, correspondant à une somme de valeurs de modules de gradient calculées pour des pixels d'un deuxième ensemble de pixels appartenant au contour courant de l'objet ; une valeur représentative de l'énergie dépendante d'un mouvement global de l'objet entre la première image et la seconde image étant calculée sous forme d'une somme de différences entre des valeurs représentatives de pixels d'un premier ensemble de pixels de la première image appartenant au contour courant et des valeurs représentatives de pixels situés aux mêmes positions spatiales que les pixels du premier ensemble de pixels dans la seconde image ;
des moyens d'estimation de mouvement pour estimer (44) une information représentative d'un mouvement global de l'objet délimité par ledit contour obtenu; et,
des moyens d'application d'une méthode de restauration d'image pour appliquer (45) à la première image une méthode de restauration d'images permettant , pour au moins chaque pixel de la première image appartenant à l'objet délimité par ledit contour obtenu, de remplacer chaque composante dudit pixel par une composante égale à une somme pondérée de ladite composante dudit pixel et d'au moins une composante d'un pixel d'au moins la deuxième image mis en correspondance avec ledit pixel de la première image en utilisant les informations représentatives du mouvement global de l'arrière-plan et du mouvement global de l'objet estimées.

**14.** Programme d ordinateur comprenant des instructions qui, lorsque le programme est exécuté par un ordinateur, conduisent celui-ci à mettre en œuvre le procédé selon les revendications 1 à 12.

**15.** Moyens de stockage lisibles par ordinateur comprenant des instructions qui, lorsqu'elles sont exécutées par un ordinateur, conduisent celui-ci à mettre en œuvre le procédé selon les revendications 1 à 12.

**Patentansprüche**

**1.** Verfahren zur Wiederherstellung von Bildern einer Bildsequenz, die ein erstes Bild und ein dem ersten Bild vorhergehendes zweites Bild enthält, wobei die ersten und zweiten Bilder ein auf einem Hintergrund in Bewegung befindliches Objekt enthalten, wobei das Verfahren, wenn es auf ein erstes Bild der Bildsequenz angewendet wird, enthält:

Schätzen (41) einer für eine globale Bewegung eines Hintergrunds des ersten Bilds bezüglich eines zweiten Bilds repräsentativen Information;
Kompensieren (42) der globalen Bewegung des Hintergrunds im zweiten Bild unter Verwendung der für die globale Bewegung des Hintergrunds repräsentativen Information, um eine registrierte Version des zweiten Bilds zu erhalten, registriertes zweites Bild genannt;
Erhalten (43) einer Kontur des Objekts des ersten Bilds durch Anwenden eines Segmentierungsverfahrens, wobei das Segmentierungsverfahren iterativ ist und bei einer Iteration enthält
eine Änderung (435) einer Kontur des Objekts im ersten Bild, die bei einer vorhergehenden Iteration des Segmentierungsverfahrens erhalten wurde, vorhergehende Kontur genannt, um eine derartige Kontur des Objekts im ersten Bild, aktuelle Kontur genannt, zu erhalten, dass ein Preis der aktuellen Kontur niedriger ist als ein Preis der vorhergehenden Kontur, wobei eine endgültige Kontur des Objekts erhalten wird, wenn eine vordefinierte Anhaltebedingung des Segmentierungsverfahrens erfüllt ist (433),
wobei der Preis einer Kontur des Objekts im ersten Bild eine Summe (4323) zwischen einem für eine Energie innerhalb der Kontur repräsentativen ersten Wert und
einem für eine Energie außerhalb der Kontur repräsentativen zweiten Wert ist,
wobei die Energie außerhalb der Kontur gleich einer gewichteten Summe einer von einer globalen Bewegung des Objekts zwischen dem ersten Bild und dem registrierten zweiten Bild abhängigen Energie und einer Konturenergie genannten Energie ist, die einer Summe von Werten von Gradientenmodulen entspricht, die für Pixel einer zur aktuellen Kontur des Objekts gehörenden zweiten Einheit von Pixeln berechnet werden;
wobei ein für die von einer globalen Bewegung des Objekts zwischen dem ersten Bild und dem zweiten Bild abhängige Energie repräsentativer Wert in Form einer Summe von Differenzen zwischen für Pixel einer zur aktuellen Kontur gehörenden ersten Einheit von Pixeln des ersten Bilds repräsentativen Werten und für Pixel repräsentativen Werten, die sich in den gleichen räumlichen Positionen wie die Pixel der ersten Einheit von Pixeln im zweiten Bild befinden, berechnet wird;
Schätzen (44) einer für eine globale Bewegung des durch die erhaltene Kontur begrenzten Objekts repräsentativen Information; und
Anwenden (45) einer Bildwiederherstellungsmethode an das erste Bild, die es für mindestens jedes zum durch die erhaltene Kontur begrenzten Objekt gehörende Pixel des ersten Bilds erlaubt, jede Komponente des Pixels durch eine Komponente zu ersetzen, die gleich einer gewichteten Summe der Komponente des Pixels und mindestens einer Komponente eines Pixels mindestens des zweiten Bilds ist, das mit dem Pixel des ersten Bilds in Übereinstimmung gebracht wird, unter Verwendung der für die globale Bewegung des Hintergrunds und die globale Bewegung des Objekts geschätzten repräsentativen Informationen.

**2.** Verfahren nach Anspruch 1, wobei zur Berechnung des für die Energie innerhalb der aktuellen Kontur repräsentativen Werts eine lokale erste Ableitung und eine lokale zweite Ableitung der Kontur für Pixel einer zur aktuellen Kontur des Objekts gehörenden dritten Einheit von Pixeln des aktuellen Bilds berechnet werden, wobei der für die innere Energie repräsentative Wert von den berechneten Ableitungen abhängt.

**3.** Verfahren nach Anspruch 2, wobei die ersten, zweiten und dritten Einheiten von Pixeln gleich sind, und jede Einheit mindestens einen Teilabschnitt der zur aktuellen Kontur des Objekts gehörenden Pixel des aktuellen Bilds enthält.

**4.** Verfahren nach einem der vorhergehenden Ansprüche, wobei bei einer ersten Iteration des Verfahrens eine ursprüngliche Kontur des Objekts im aktuellen Bild ausgehend von einer bei einer Anwendung des Segmentierungsverfahrens an das Bezugsbild erhaltenen endgültigen Kontur oder von einer von einem Bediener im Bezugsbild spezifizierten Kontur erhalten wird (431).

**5.** Verfahren nach einem der vorhergehenden Ansprüche, wobei bei jeder Schätzung einer für eine globale Bewegung repräsentativen Information eine für die Form und die Position des Objekts repräsentative Information erhalten wird, wobei die für die Form und die Position des Objekts repräsentative Information verwendet wird, um Pixel zu maskieren, die bei der Schätzung nicht berücksichtigt werden sollen.

**6.** Verfahren nach Anspruch 5, wobei nach der Schätzung der für die globale Bewegung des Objekts repräsentativen Information, erste Information genannt, eine Filterung an die erste Information angewendet wird, um regelmäßige Veränderungen der Bewegung des Objekts zwischen zwei aufeinanderfolgenden Bildern der Bildsequenz zu garantieren, wobei die Filterung die folgenden Schritte enthält:

Bestimmen (800) einer ersten Matrix, die es ermöglicht, eine Bewegung des Objekts in einem auf einen Schwerpunkt des Objekts zentrierten Bezugssystem im registrierten ersten Bild zu schätzen, und einer zweiten Matrix, die es ermöglicht, eine Bewegung des Objekts in einem auf einen Schwerpunkt des Objekts zentrierten Bezugssystem im registrierten zweiten Bild zu schätzen;
Verwenden der ersten und der zweiten Matrix, um eine für die Bewegung des Objekts im Bezugssystem repräsentative Information, zweite Information genannt, ausgehend von der ersten Information zu berechnen (801);
Verwenden der zweiten Information, um eine für Translationskomponenten der Bewegung des Objekts repräsentative Matrix zu erhalten (802);
Verwenden der zweiten Information und der dritten Matrix, um eine für Komponenten der Bewegung des Objekts anders als die Translationskomponenten repräsentative vierte Matrix zu erhalten (803);
Erhalten (804) einer gefilterten Version der dritten Matrix, aktuelle gefilterte dritte Matrix genannt, indem eine gewichtete Summe zwischen der dritten Matrix und
einer vorhergehenden gefilterten dritten Matrix berechnet wird, die bei der Durchführung des Verfahrens am zweiten Bild erhalten wird;
Erhalten (805) einer gefilterten Version der vierten Matrix, aktuelle gefilterte vierte Matrix genannt, indem eine gewichtete Summe zwischen der vierten Matrix und
einer vorhergehenden gefilterten vierten Matrix berechnet wird, die bei der Durchführung des Verfahrens am zweiten Bild erhalten wird; und
Erhalten einer für eine gefilterte globale Bewegung des Objekts repräsentativen Information, indem die erste und die zweite Matrix, die aktuelle gefilterte dritte Matrix und die aktuelle gefilterte vierte Matrix verwendet werden.

**7.** Verfahren nach Anspruch 6, wobei die zweite Information folgendermaßen berechnet wird:

$$\overline{dH_k^{Objekt}} = V_k^{-1} \cdot dH_k^{Objekt} \cdot V_{k-1}$$

wobei $V_k$ die erste Matrix ist, $V_{k-1}$ die zweite Matrix ist, $dH_k^{Objekt}$ die erste Information und $\overline{dH_k^{Objekt}}$ die zweite Information ist.

**8.** Verfahren nach Anspruch 7, wobei die dritte Matrix folgendermaßen berechnet wird:

$$H_k^t = ApproxT\left(V_k^{-1} \cdot dH_k^{Objekt} \cdot V_{k-1}\right)$$

wobei $H_k^t$ die dritte Matrix und ApproxT(X) eine Näherung in Translation einer homographischen Matrix X ist.

**9.** Verfahren nach Anspruch 8, wobei die vierte Matrix folgendermaßen berechnet wird:

$$H_k^h = H_k^{t-1} \cdot V_k^{-1} \cdot dH_k^{Objekt} \cdot V_{k-1}$$

wobei $H_k^h$ die vierte Matrix ist.

**10.** Verfahren nach Anspruch 9, wobei die aktuelle gefilterte dritte Matrix folgendermaßen berechnet wird:

$$H_k^{t^{Filt}} = a \cdot H_{k-1}^{t}{}^{Filt} + (1-a)H_k^{t}$$

wobei $H_k^{t^{Filt}}$ die aktuelle gefilterte dritte Matrix ist, $H_{k-1}^{t}{}^{Filt}$ die vorhergehende gefilterte dritte Matrix ist, die bei der Durchführung des Verfahrens am zweiten Bild erhalten wird, und $\alpha$ eine vordefinierte Konstante zwischen "0" und "1" ist.

**11.** Verfahren nach Anspruch 10, wobei die aktuelle gefilterte vierte Matrix folgendermaßen berechnet wird:

$$H_k^{h^{Filt}} = \beta \cdot I + (1-\beta)H_k^{h}$$

wobei $H_k^{h^{Filt}}$ die aktuelle gefilterte vierte Matrix ist, I eine Matrix Identität ist und $\beta$ eine vordefinierte Konstante zwischen "0" und "1" ist.

**12.** Verfahren nach den Ansprüchen 10 und 11, wobei die für eine gefilterte globale Bewegung des Objekts repräsentative Information folgendermaßen berechnet wird:

$$dH_k^{Objekt^{Filt}} = V_k \cdot H_k^{t^{Filt}} \cdot H_k^{h^{Filt}} \cdot V_{k-1}^{-1} \cdot$$

**13.** Vorrichtung zur Wiederherstellung von Bildern einer Bildsequenz, die ein erstes Bild und ein dem ersten Bild vorhergehendes zweites Bild enthält, wobei die ersten und zweiten Bilder ein Objekt in Bewegung auf einem Hintergrund enthalten, wobei die Vorrichtung, wenn sie an ein erstes Bild der Bildsequenz angewendet wird, enthält:

Schätzeinrichtungen, um eine für eine globale Bewegung eines Hintergrunds des ersten Bilds bezüglich eines zweiten Bilds repräsentative Information zu schätzen (41);
Bewegungskompensationseinrichtungen, um die globale Bewegung des Hintergrunds im zweiten Bild unter Verwendung der für die globale Bewegung des Hintergrunds repräsentativen Information zu kompensieren (42), um eine registrierte Version des zweiten Bilds zu erhalten, registriertes zweites Bild genannt;
Einrichtungen zum Erhalt von Konturen, um eine Kontur des Objekts des ersten Bilds zu erhalten (43), unter Verwendung von Segmentierungseinrichtungen,
wobei die Segmentierungseinrichtungen enthalten:

Änderungseinrichtungen, um eine bei einer vorhergehenden Anwendung der Segmentierung erhaltene Kontur des Objekts im ersten Bild, vorhergehende Kontur genannt, zu ändern (435), um eine aktuelle Kontur genannte Kontur des Objekts im ersten Bild zu erhalten, derart, dass ein Preis der aktuellen Kontur niedriger ist als ein Preis der vorhergehenden Kontur, wobei eine endgültige Kontur des Objekts erhalten wird, wenn eine vordefinierte Bedingung des Anhaltens der Änderungen der Kontur erfüllt ist (433), wobei der Preis einer Kontur des Objekts im ersten Bild eine Summe (4323) zwischen einem für eine Energie innerhalb der Kontur repräsentativen ersten Wert und einem für eine Energie außerhalb der Kontur repräsentativen zweiten Wert ist, wobei die Energie außerhalb der Kontur gleich einer gewichteten Summe einer von einer globalen Bewegung des Objekts zwischen dem ersten Bild und dem registrierten zweiten Bild abhängigen Energie und einer Konturenergie genannten Energie ist,
die einer Summe von Werten von Gradientenmodulen entspricht, die für Pixel einer zur aktuellen Kontur des Objekts gehörenden zweiten Einheit von Pixeln berechnet werden; wobei ein für die von einer globalen Bewegung des Objekts zwischen dem ersten Bild und dem zweiten Bild abhängige Energie repräsentativer Wert in Form einer Summe von Differenzen zwischen für Pixel einer zur aktuellen Kontur gehörenden ersten Einheit von Pixeln des ersten Bilds repräsentativen Werten und für Pixel repräsentativen Werten, die sich in den gleichen räumlichen Positionen wie die Pixel der ersten Einheit von Pixeln im zweiten Bild befinden, berechnet wird;
Bewegungsschätzeinrichtungen zum Schätzen (44) einer für eine globale Bewegung des durch die erhaltene Kontur begrenzten Objekts repräsentativen Information; und

Einrichtungen zur Anwendung einer Bildwiederherstellungsmethode, um eine Bildwiederherstellungsmethode an das erste Bild anzuwenden (45), die es für mindestens jedes zum durch die erhaltene Kontur begrenzten Objekt gehörenden Pixel des ersten Bilds erlaubt, jede Komponente des Pixels durch eine Komponente zu ersetzen, die gleich einer gewichteten Summe der Komponente des Pixels und mindestens einer Komponente eines Pixels mindestens des zweiten Bilds ist, das mit dem Pixel des ersten Bilds in Übereinstimmung gebracht wird, unter Verwendung der für die globale Bewegung des Hintergrunds und die globale Bewegung des Objekts geschätzten repräsentativen Informationen.

14. Computerprogramm, das Anweisungen enthält, die, wenn das Programm von einem Computer ausgeführt wird, diesen veranlassen, das Verfahren nach den Ansprüchen 1 bis 12 durchzuführen.

15. Computerlesbare Speichereinrichtungen, die Anweisungen enthalten, die, wenn sie von einem Computer ausgeführt werden, diesen veranlassen, das Verfahren nach den Ansprüchen 1 bis 12 durchzuführen.

**Claims**

1. Method for restoring images of a sequence of images comprising a first image and a second image preceding said first image, said first and second images comprising an object moving over a background, wherein the method comprises, when it is applied to a first image of the sequence of images:

   estimating (41) information representative of an overall movement of a background of the first image with respect to a second image;
   compensating (42) the overall movement of the background in the second image using said information representative of the overall movement of the background, in order to obtain a realigned version of the second image, referred to as the realigned second image;
   obtaining (43) an outline of said object of the first image by applying a segmenting method,
   said segmenting method being iterative and comprising, in one iteration,
   modifying (435) an outline of the object in the first image obtained in a preceding iteration of said segmenting method, referred to as the preceding outline, so as to obtain an outline of the object in the first image, referred to as the current outline, such that a cost of the current outline is lower than a cost of the preceding outline, a final outline of the object being obtained when a predefined condition for stopping said segmenting method is met (433),
   the cost of an outline of the object in the first image being a sum (4323) of a first value representative of an energy internal to said outline and of a second value representative of an energy external to said outline,
   the energy external to said outline being equal to a weighted sum of an energy depending on an overall movement of the object between the first image and the realigned second image and of an energy, referred to as the outline energy, corresponding to a sum of values of gradient moduli computed for pixels of a second set of pixels belonging to the current outline of the object;
   a value representative of the energy depending on an overall movement of the object between the first image and the second image being computed in the form of a sum of differences between values representative of pixels of a first set of pixels of the first image belonging to the current outline and of values representative of pixels located in the same spatial positions as the pixels of the first set of pixels in the second image;
   estimating (44) information representative of an overall movement of the object bounded by said obtained outline; and
   applying (45) to the first image an image-restoring method that allows, for at least each pixel of the first image belonging to the object bounded by said obtained outline, each component of said pixel to be replaced by a component equal to a weighted sum of said component of said pixel and of at least one component of a pixel of at least the second image matched with said pixel of the first image using the estimated information representative of the overall movement of the background and of the overall movement of the object.

2. Method according to Claim 1, wherein, to compute the value representative of the energy internal to the current outline, a local first derivative and a local second derivative of the outline are computed for pixels of a third set of pixels of the current image belonging to the current outline of the object, said value representative of the internal energy being dependent on said computed derivatives.

3. Method according to Claim 2, wherein the first, second and third sets of pixels are identical, and each set comprises at least one sub-portion of the pixels of the current image belonging to the current outline of the object.

4. Method according to any one of the preceding claims, wherein, in a first iteration of said method, an initial outline of the object in the current image is obtained (431) from a final outline obtained in an application of the segmenting method to the reference image or from an outline specified by an operator in the reference image.

5. Method according to any one of the preceding claims, wherein, in each estimation of information representative of an overall movement, information representative of the shape and of the position of the object is obtained, said information representative of the shape and of the position of the object being used to mask pixels that must not be taken into account in said estimation.

6. Method according to Claim 5, wherein, following the estimation of said information representative of the overall movement of the object, which is referred to as the first information, filtering is applied to said first information in order to guarantee regular variations in the movement of the object between two successive images of the sequence of images, said filtering comprising the following steps:

determining (800) a first matrix allowing a movement of the object in a frame of reference centred on a centroid of the object in the realigned first image to be estimated and a second matrix allowing a movement of the object in a frame of reference centred on a centroid of the object in the realigned second image to be estimated;
using the first and second matrices to compute (801) information representative of the movement of the object in said frame of reference, which is referred to as the second information, from said first information;
using the second information to obtain (802) a third matrix representative of translational components of the movement of the object;
using the second information and the third matrix to obtain (803) a fourth matrix representative of components of the movement of the object other than the translational components;
obtaining (804) a filtered version of the third matrix, referred to as the current filtered third matrix, by computing a weighted sum of the third matrix and of a preceding filtered third matrix obtained during the implementation of said method on the second image;
obtaining (805) a filtered version of the fourth matrix, referred to as the current filtered fourth matrix, by computing a weighted sum of the fourth matrix end of a preceding filtered fourth matrix obtained during the implementation of the method on the second image; and
obtaining information representative of a filtered overall movement of the object using the first and second matrices, the current filtered third matrix and the current filtered fourth matrix.

7. Method according to Claim 6, wherein the second information is computed in the following way:

$$\overline{dH_k^{Object}} = V_k^{-1}.dH_k^{Object}.V_{k-1}$$

where $V_k$ is the first matrix, $V_{k-1}$ is the second matrix, $dH_k^{Object}$ is the first information and $\overline{dH_k^{Object}}$ is the second information.

8. Method according to Claim 7, wherein the third matrix is computed in the following way:

$$H_k^t = ApproxT\left(V_k^{-1}.dH_k^{Object}.V_{k-1}\right)$$

where $H_k^t$ is the third matrix and *ApproxT(X)* is a translational approximation of a homographic matrix X.

9. Method according to Claim 8, wherein the fourth matrix is computed in the following way:

$$H_k^h = H_k^{t-1}.V_k^{-1}.dH_k^{Object}.V_{k-1}$$

where $H_k^h$ is the fourth matrix.

10. Method according to Claim 9, wherein the current filtered third matrix is computed in the following way:

$$H_k^{t^{Filt}} = \alpha . H_{k-1}^{t}{}^{Filt} + (1 - \alpha)H_k^{t}$$

where $H_k^{t^{Filt}}$ is the current filtered third matrix, $H_{k-1}^{t}{}^{Filt}$ is the preceding filtered third matrix obtained during the implementation of said method on the second image and $\alpha$ is a predefined constant comprised between "0" and "1".

11. Method according to Claim 10, wherein the current filtered fourth matrix is computed in the following way:

$$H_k^{h^{Filt}} = \beta \cdot I + (1 - \beta)H_k^{h}$$

where $H_k^{h^{Filt}}$ is the current filtered fourth matrix, $I$ is an identity matrix and $\beta$ is a predefined constant comprised between "0" and "1".

12. Method according to Claims 10 and 11, wherein the information representative a filtered overall movement of the object is computed in the following way:

$$dH_k^{Object^{Filt}} = V_k . H_k^{t^{Filt}} . H_k^{h^{Filt}} . V_{k-1}^{-1} .$$

13. Device for restoring images of a sequence of images comprising a first image and a second image preceding said first image, said first and second images comprising an object moving over a background, wherein the device comprises, when it is applied to a first image of the sequence of images:

> means for estimating (41) information representative of an overall movement of a background of the first image with respect to a second image;
> movement-compensating means for compensating (42) the overall movement of the background in the second image using said information representative of the overall movement of the background, in order to obtain a realigned version of the second image, referred to as the realigned second image;
> outline-obtaining means for obtaining (43) an outline of said object of the first image using said segmenting means,
> said segmenting means comprising:

>> modifying means for modifying (435) an outline of the object in the first image obtained in a preceding application of said segmentation, referred to as the preceding outline, so as to obtain an outline of the object in the first image, referred to as the current outline, such that a cost of the current outline is lower than a cost of the preceding outline, a final outline of the object being obtained when a predefined condition for stopping the modifications of the outline is met (433), the cost of an outline of the object in the first image being a sum (4323) of a first value representative of an energy internal to said outline and of a second value representative of an energy external to said outline, the energy external to said outline being equal to a weighted sum of an energy depending on an overall movement of the object between the first image and the realigned second image and of an energy, referred to as the outline energy, corresponding to a sum of values of gradient moduli computed for pixels of a second set of pixels belonging to the current outline of the object; a value representative of the energy depending on an overall movement of the object between the first image and the second image being computed in the form of a sum of differences between values representative of pixels of a first set of pixels of the first image belonging to the current outline and of values representative of pixels located in the same spatial positions as the pixels of the first set of pixels in the second image;
>> movement-estimating means for estimating (44) information representative of an overall movement of the object bounded by said obtained outline; and
>> means for applying an image-restoring method, for applying (45) to the first image an image-restoring method that allows, for at least each pixel of the first image belonging to the object bounded by said obtained outline, each component of said pixel to be replaced by a component equal to a weighted sum of said component of said pixel and of at least one component of a pixel of at least the second image matched with said pixel of the first image using the estimated information representative of the overall movement of the background and of the overall movement of the object.

14. Computer program comprising instructions that, when the program is executed by a computer, lead the latter to implement the method according to Claims 1 to 12.

15. Computer-readable storage means comprising instructions that, when they are executed by a computer, lead the latter to implement the method according to Claims 1 to 12.

Fig. 1

Fig. 2

```
┌─────────────────────────────────────────────────┐
│                                                   │  ⌐ 52
│  ┌───────┐   ┌───────┐   ┌───────┐               │
│  │  521  │   │  522  │   │  523  │               │
│  │  CPU  │   │  RAM  │   │  ROM  │               │
│  └───┬───┘   └───┬───┘   └───┬───┘               │
│      │           │           │                    │
│  ────┴───────────┴───────────┴────────────────    │
│  ⌐                                                │
│  520     ┌───────┐   ┌───────┐                   │
│          │  HDD  │   │  COM  │                    │
│          │  524  │   │  525  │                    │
│          └───────┘   └───────┘                    │
│                                                   │
└─────────────────────────────────────────────────┘
```

Fig. 3

```
            ┌─────────────────┐
            │     Estimer     │
            │  mouvement fond │ ⌐ 41
            └────────┬────────┘
                     │
            ┌────────▼────────┐
            │  Compensation   │ ⌐ 42
            │  mouvement fond │
            └────────┬────────┘
                     │
            ┌────────▼────────┐
            │ Segmentation objet │ ⌐ 43
            └────────┬────────┘
                     │
            ┌────────▼────────┐
            │   Estimation    │ ⌐ 44
            │ mouvement objet │
            └────────┬────────┘
                     │
            ┌────────▼────────┐
            │   Restauration  │ ⌐ 45
            └─────────────────┘
```

Fig. 4

Obtenir un contour
initial de l'objet — 431

Calcul coût du
contour J — 432

Modification du
contour — 435

Condition d'arrêt vérifiée? — 433

Fin — 434

Fig. 5

Calcul de l'énergie interne — 4321

Calcul de l' énergie externe — 4322

Calcul du coût du contour — 4323

Fig. 6

Obtention position objet ⌐410

Masquage objet/fond ⌐411

Estimation de mouvement global ⌐412

Fig. 7

Définition d'une matrice de passage ⌐800

Calcul déplacement de l'objet ⌐801

Estimation composantes de translation ⌐802

Estimation autres composantes ⌐803

Filtrage composantes de translation ⌐804

Filtrage autres composantes ⌐805

Détermination mouvement globale de l'objet filtré ⌐806

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7440634 B2

**Littérature non-brevet citée dans la description**

- Full-Frame Video Stabilization. **MATSUSHITA et al.** IEEE Computer Society Conférence on Computer Vision and Pattern Récognition. CVPR, 2005, vol. 1, 50-57
- Extraction d'objets vidéo: une approche combinant les contours actifs et le flot optique. **ZINBI et al.** Actes des Sixièmes Journées Extraction et Gestion des Connaissance. EGC, 2006, 41-46
- **STEVE MANN ; OSALING W. PICARD.** Orbite vidéo du groupe projectif: une approche simple de l'estimation sans caractéristiques des paramètres (« video Orbits of the Projective Group : a simple approach to featureless estimation of parameters » en terminologie anglo-saxonne). *IEEE Tr. On Image Processing,* Septembre 1997, vol. 6 (9
- Active Contour Models. **MICHAEL KASS ; ANDREW WITKIN ; DEMETRI TERZOPOULOS.** International Journal of Computer Vision. Kluwer Academic Publishers, 1987, 321-331